# EUROPEAN PATENT APPLICATION

(11) **EP 3 943 775 A1**
(43) Date of publication of application: **26.01.2022**
(21) Application number: 20776883.9
(22) Date of filing: 06.03.2020
(51) Int. Cl.: F16F 1/12, F16F 9/32, F16F 9/44

(54) **SUSPENSION DEVICE**

(30) Priority: 22.03.2019 JP 2019054147
(71) Applicant: KYB Motorcycle Suspension Co., Ltd., Kani-shi, Gifu 509-0298 (JP); Yamaha Hatsudoki Kabushiki Kaisha, Iwata-shi, Shizuoka 438-8501 (JP)
(72) Inventor: AKIMOTO, Masanobu, Kani-shi, Gifu 509-0298 (JP); IWAMURA, Fumiaki, Iwata-shi, Shizuoka 438-8501 (JP)
(74) Representative: MFG Patentanwälte Meyer-Wildhagen Meggle-Freund Gerhard PartG mbB
(86) International application number: PCT/JP2020/009650
(87) International publication number: WO 2020/195703

(57) **Abstract**

A suspension device includes: an annular spring seat (4) that supports one end of a suspension spring; an annular regulating member (5) that regulates movement of the spring seat (4) to the opposite side to the side closer to the suspension spring; three cam portions (7A, 7B, and 7C) each having a phase difference of 120 degrees provided circumferentially in the regulating member (5); three protruding portions (6A, 6B, and 6C) provided circumferentially at regular intervals in the spring seat (4), in which the cam portions (7A, 7B, and 7C) each have a plurality of cam surfaces (7a and 7b) different in axial level, the cam surfaces (7a and 7b) each include an inclined surface, and the respective inclined surfaces thereof are equivalent in angle of inclination, and the protruding portions (6A, 6B, and 6C) each have an abutment surface (6a) that slants along the inclined surfaces and is capable of abutting on the inclined surfaces.

## Description

### Technical Field

The present invention relates to an enhanced suspension device.

### Background Art

Conventionally, a suspension device is used to suspend a wheel in a vehicle. Such a suspension device includes: a telescopic member, such as a damper, including an outer tube and a rod that goes in and out of the outer tube, the telescopic member being to produce damping force in expansion and contraction; and a suspension spring which is disposed around the outer circumference of the telescopic member, the suspension spring elastically supporting a body by biasing the telescopic member in the direction of extension, in which the initial load of the suspension spring can be adjusted by a cam mechanism.

In the suspension device, a spring seat that supports one end of the suspension spring is annular and is mounted, rotatably circumferentially and movably axially, on the outer circumference of the outer tube or a barrel shaped cover that covers the outer circumference of the rod protruding outward from the outer tube. Furthermore, a regulating member is fixed, on the opposite side to the side closer to the suspension spring of the spring seat, to the outer circumference of the outer tube or the cover. The regulating member regulates movement of the spring seat to the opposite side to the side closer to the suspension spring.

For example, as disclosed in JP 2007-085378 A and JP 60-108503 U1, the end portion that the spring seat has on the side closer to the regulating member is provided with a cam portion including a plurality of cam surfaces different in axial level. Meanwhile, the regulating member is provided with a protruding portion that protrudes toward the spring seat and has a roundish leading end that abuts selectively on any of the cam surfaces. Thus, when the cam surface on which the protruding portion abuts is changed due to rotation of the spring seat, the axial position of the spring seat to the outer tube or the cover is changed, so that the initial load of the suspension spring can be adjusted (e.g., Patent Literature 1 or 2).

### Citation List

### Patent Literature

Patent Literature 1: JP 2007-085378 A
Patent Literature 2: JP 60-108503 U1

### Summary of Invention

### Technical Problem

In the suspension device disclosed in JP 2007-085378 A, the number of protruding portions is one, and thus the spring seat and the regulating member abut on at a single point. Thus, the spring force of the suspension spring acts intensively on the single point. Therefore, in order to secure the durability of both of the spring seat and the regulating member and secure the junction strength of the regulating member, the spring seat and the regulating member are each formed of metal, such as iron, excelling in strength, and the regulating member is welded to the cover. Thus, the spring seat and the regulating member are heavy in weight.

Like the suspension device disclosed in JP 60-108503 U1, the spring seat including the cam portion is mounted on the outer circumference of the outer tube. In this case, the regulating member is fixed to the outer circumference of the outer tube. However, for example, in a case where a sliding member, such as a piston or a free piston, is slidably in contact with the inner circumference of the outer tube, in order to prevent weld strain from occurring in the outer tube, the regulating member is not necessarily directly welded to the outer tube. In this case, as a solution, a protector tube for welding of the regulating member to the outer circumference of the outer tube requires providing, resulting in much expense in time and effort.

Therefore, an object of the present invention is to provide a suspension device allowing a spring seat and a regulating member to be each formed of material lower in strength and lighter in weight than ever before and requires no welding for the regulating member.

### Solution to Problem

In order to solve the problem, a suspension device includes: an annular spring seat that supports one end of a suspension spring; an annular regulating member that regulates movement of the spring seat to the opposite side to the side closer to the suspension spring; three cam portions each having a phase difference of 120 degrees provided circumferentially in one of the spring seat and the regulating member; and three protruding portions provided circumferentially at regular intervals in the other of the spring seat and the regulating member. The cam portions each have a plurality of cam surfaces different in axial level. The cam surfaces each include an inclined surface, and the respective inclined surfaces thereof are equivalent in angle of inclination. Meanwhile, the protruding portions each have an abutment surface that slants along the inclined surfaces and is capable of abutting on the inclined surfaces.

According to the above configuration, the protruding portions are three in total number, and the cam portions are three in total number. Thus, abutments in surface contact are present at three places in the circumferential direction between the spring seat and the regulating member. Thus, in comparison to a conventional suspension device having a single protruding portion, a wider contact area between the spring seat and the regulating member is acquired, and the spring force of the suspension spring acts in a dispersing manner. Thus, pressure applied to each abutment between the spring seat and the regulating member due to the spring force of the suspension spring is lower than ever before.

Furthermore, according to the above configuration, the spring seat is supported at three places in the circumferential direction by the regulating member, so that the spring seat can be prevented from being unsteady to the regulating member. Thus, unusual noise due to the unsteadiness can be prevented from occurring.

In the suspension device, when the cam surface located farthest from the suspension spring in the plurality of cam surfaces in each of the cam portions is defined as a first cam surface, an end closer to the first cam surface in each of the cam portions is defined as a starting end, and an end opposite to the end closer to the first cam surface is defined as a terminating end, the inclined surfaces each may slant closer to the suspension spring toward the terminating end, a reverse inclined surface slanting reversely to the inclined surfaces may be provided on a side closer to the starting end of the first cam surface in each of the cam portions, and with the first cam surface having the inclined surface on which the abutment surface of the corresponding protruding portion abuts, a gap may be present between the reverse inclined surface and the corresponding protruding portion, and a gap may be present between a bottom portion provided between the corresponding adjacent protruding portions and the corresponding cam portion. Thus, even in a case where the protruding portions and the cam portions have slight errors in dimensions, the protruding portions and the first cam surfaces abut on reliably. Therefore, the spring seat is supported at three places in the circumferential direction by the regulating member, so that unusual noised due to unsteadiness can be prevented from occurring.

The suspension device may further include a tank provided at a position overlapping the outer tube in radial view of the outer tube, in which respective portions in a circumferential direction of the spring seat and the regulating member may be disposed between the outer tube and the tank, and circumferential rotation of the regulating member to the outer tube may be regulated. Thus, when a worker engages a tool or the like with the spring seat and rotates the spring seat, the spring seat and the regulating member do not rotate together. Therefore, use of a tool or the like enables easy rotation of the spring seat to the regulating member. Rotation of the spring seat to the regulating member with a tool or the like enables, at the time of adjustment of the initial load of the suspension spring, prevention of the hands of the worker from being pinched between the spring seat and the tank or between the regulating member and the tank.

In the suspension device, an outer circumference of the regulating member may be provided with a mark at a position corresponding to right of the outer tube and a mark at a position corresponding to left of the outer tube when the outer tube is viewed with the tank oriented in front, the spring seat may be provided with a scale indicating the cam surface on which the protruding portions each abut, at a position corresponding to each of the marks, and the protruding portions may correspond to the cam portions in one-to-one relationship. Thus, the worker visually recognizes the marks, easily. Furthermore, although the spring seat and the regulating member each having the three protruding portions or the three cam portions are provided with the two scales and the two marks, the protruding portions correspond to the cam portions in one-to-one relationship. Thus, a defect that the initial load of the suspension spring is set differently in spite of adjustment to the same scale can be prevented from occurring.

The suspension device may further include a mis-combination preventive portion that prevents any combinations out of correspondence relationship between the protruding portions and the cam portions. Thus, such a defect that the initial load of the suspension spring is set differently in spite of adjustment to the same scale as described above can be easily and reliably prevented from occurring.

### Advantageous Effects of Invention

The suspension device according to the present invention allows the spring seat and the regulating member to be each formed of material lower in strength and lighter in weight than ever before and requires no welding fixation for the regulating member.

### Brief Description of Drawings

Fig. 1 is a right side view of a vehicle equipped with a rear cushion device as a suspension device according to an embodiment of the present invention.
Fig. 2 is a right side view of the rear cushion device as the suspension device according to the embodiment of the present invention.
Fig. 3 is an exploded perspective view of an upper spring seat and a regulating member in the rear cushion device as the suspension device according to the embodiment of the present invention.
Fig. 4 is a plan view of the upper spring seat illustrated in Fig. 3.
Fig. 5 is a perspective view of the regulating member illustrated in Fig. 3 obliquely viewed from below.
Fig. 6(a) is an explanatory view of an upper-end shape including cam surfaces of the upper spring seat illustrated in Fig. 3. Fig. 6(b) is a partially enlarged view of (a).
Fig. 7 is an explanatory view of a lower-end shape including abutment surfaces of the regulating member illustrated in Fig. 3.
Fig. 8 is an explanatory view of the shape of opposed surfaces including the cam surfaces and the abutment surfaces with the upper spring seat and the regulating member illustrated in Fig. 3 assembled together.
Fig. 9 is an exploded perspective view of an upper spring seat and a regulating member according to a modification of the upper spring seat and the regulating member in the rear cushion device as the suspension device according to the embodiment of the present invention.

### Description of Embodiments

A suspension device according to an embodiment of the present invention will be described below with reference to the drawings. The same reference signs denoted in some drawings indicate the same components (portions) or corresponding components (portions).

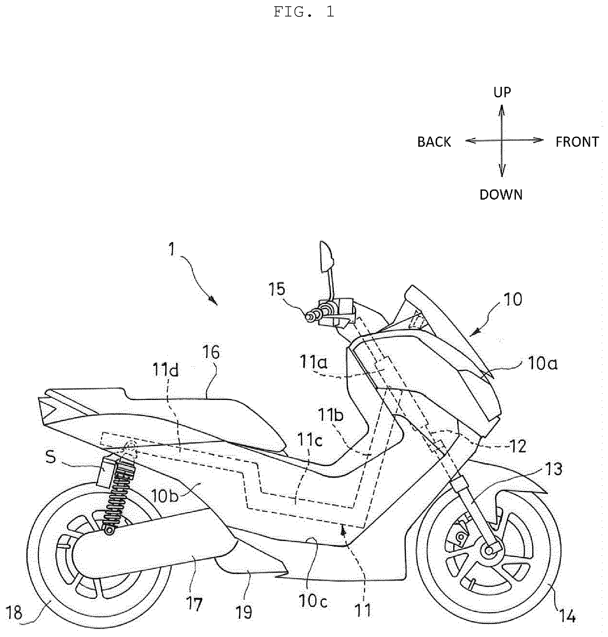

As illustrated in Fig. 1, the suspension device according to the embodiment of the present invention is used as a rear cushion device S that suspends a rear wheel 18 in a motorcycle 1. In the following description, for each member included in the motorcycle 1, unless otherwise specified, the "up", "down", "left", "right", "front", and "back" viewed from a rider on a seat 16 in the motorcycle 1 with each member attached to the motorcycle 1 are simply referred to as "up", "down", "left", "right", "front", and "back".

The motorcycle 1 includes: a body frame 11 as the framework of a body 10 in the motorcycle 1; a front fork 13 attached, turnably right and left (near and far in Fig. 1), to the front portion of the body frame 11 through a steering shaft 12; a front wheel 14 supported by the lower portion of the front fork 13; a handlebar 15 coupled to the upper end of the steering shaft 12; the seat 16 set on the body frame 11; a swinging arm 17 coupled, swingably upward and downward, to the rear portion of the body frame 11; the rear wheel 18 supported by the rear portion of the swinging arm 17; the rear cushion device S interposed between the body frame 11 and the swinging arm 17; an engine 19 supported by the body frame 11; and a power transmission device (not illustrated) that transmits driving force produced by the engine 19 to the rear wheel 18.

The body frame 11 includes: a head pipe 11a disposed at the front portion of the motorcycle 1; a down frame 11b extending downward, backward from the rear portion of the head pipe 11a; an under frame 11c extending backward from the lower end portion of the down frame 11b; and a rear frame 11d extending upward, backward from the rear end portion of the under frame 11c.

The steering shaft 12 is inserted turnably in the head pipe 11a. The seat 16 is supported by the rear frame 11d to which the rear cushion device S is coupled. Furthermore, provided are a front cover 10a and a center cover 10b that cover the body frame 11. Below the under frame 11c, provided is a foot board 10c for the rider to place its feet thereon, coupled with the center cover 10b.

Note that a vehicle to be equipped with the rear cushion device S as the suspension device according to the embodiment of the present invention is not limited to the motorcycle 1 illustrated in Fig. 1. For example, the suspension device according to the present invention may be used in a straddle-type vehicle, such as a tricycle, a reverse tricycle, or a buggy, different from any motorcycles or may be used in a vehicle different from any straddle-type vehicles. Furthermore, depending on a vehicle to be equipped with the suspension device according to the present invention, the suspension device according to the present invention may be used to suspend a front wheel.

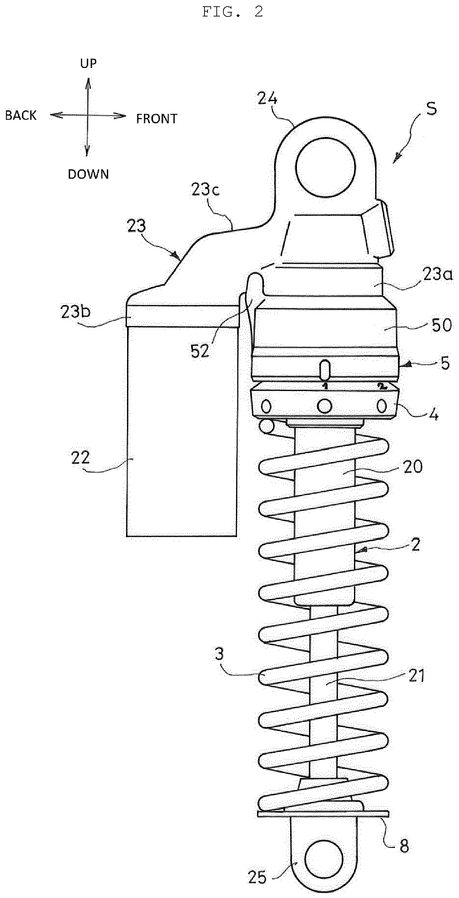

Next, the rear cushion device S as the suspension device according to the embodiment of the present invention will be described. As illustrated in Fig. 2, the rear cushion device S includes a damper 2 and a suspension spring 3 which is provided around the outer circumference of the damper 2.

The damper 2 includes: an outer tube 20; a rod 21 that goes in and out of the outer tube 20 and has one end protruding downward from the outer tube 20; a tank 22 disposed behind the outer tube 20; and a coupling member 23 coupling the outer tube 20 and the upper end of the tank 22. The coupling member 23 is provided with a body-side bracket 24 for coupling the outer tube 20 to the rear frame 11d. Meanwhile, the lower end of the rod 21 protruding outward from the outer tube 20 is provided with a wheel-side bracket 25 for coupling the rod 21 to the swinging arm 17.

The damper 2 is interposed between the body 10 and the rear wheel 18 through the body-side bracket 24 and the wheel-side bracket 25. For example, at the time of traveling of the motorcycle 1 on a bumpy road surface or the like, the swinging arm 17 swings up and down in response to up-and-down vibration of the rear wheel 18 to the body 10. Then, the rod 21 goes in and out of the outer tube 20, so that the damper 2 expands and contracts. As above, in the present embodiment, the damper 2 serves as a telescopic member in the suspension device. Such expansion and contraction of the damper (telescopic member) 2 as above corresponds to expansion and contraction of the rear cushion device (suspension device) S.

Although not illustrated, the outer tube 20 houses liquid, such as hydraulic oil, and has a piston inserted slidably therein. The piston is coupled to the upper end of the rod 21 inserted in the outer tube 20. When the rod 21 goes in and out of the outer tube 20 at the time of expansion and contraction of the damper 2, the piston moves up and down (axially) in the outer tube 20. At this time, the liquid moves in the outer tube 20 and moves between the outer tube 20 and the tank 22 through a path that the coupling member 23 has. In addition, the flow of the liquid is given resistance. Thus, at the time of expansion and contraction of the damper 2, damping force occurs due to the resistance.

As above, in the present embodiment, the damper 2 as a telescopic member serves as a hydraulic damper. Furthermore, the damper 2 is a single-sided rod type, and the rod 21 inserted movably axially in the outer tube 20 is provided on one side of the piston. The damper 2 is an inverted type and has the outer tube 20 disposed on the upper side (body side) and the rod 21 disposed on the lower side (wheel side).

However, the configuration of the damper 2 can be appropriately changed. For example, the damper 2 may be a double-sided rod type, namely, a rod may be provided on each side of a piston. The damper 2 may be an upright type, namely, an outer tube may be disposed on the wheel side and a rod may be disposed on the body side. The damper 2 may be a damper that is different from any hydraulic dampers and produces damping force with electromagnetic force or frictional resistance. Furthermore, the telescopic member is not necessarily any damper as long as the telescopic member includes the outer tube 20 and the rod 21 inserted movably axially in the outer tube 20. Thus, for example, the telescopic member may be a guide or the like that supports a suspension spring.

Next, the suspension spring 3 is a coil spring. Both ends in the axial direction of the suspension spring 3 are supported by an upper spring seat 4 and a lower spring seat 8 that are annular. The upper spring seat 4 is mounted, rotatably circumferentially and movably axially, on the outer circumference of the outer tube 20. A regulating member 5 regulates upward movement of the upper spring seat 4 to the outer tube 20. Meanwhile, the lower spring seat 8 is mounted on the outer circumference of the lower end portion of the rod 21 protruding outward from the outer tube 20, in which the wheel-side bracket 25 regulates downward movement of the lower spring seat 8 to the rod 21.

As above, one end of the suspension spring 3 is supported by the outer tube 20 through the upper spring seat 4 and the regulating member 5. The other end of the suspension spring 3 is supported by the rod 21 through the lower spring seat 8 and the wheel-side bracket 25. That is, the suspension spring 3 is interposed between the outer tube 20 and the rod 21. When the rod 21 goes in and out of the outer tube 20 at the time of expansion and contraction of the damper 2, the suspension spring 3 expands and contracts to produce spring force corresponding to its compression level. The spring force of the suspension spring 3 acts on the damper 2 in the direction of extension. Thus, the body 10 is supported elastically by the suspension spring 3.

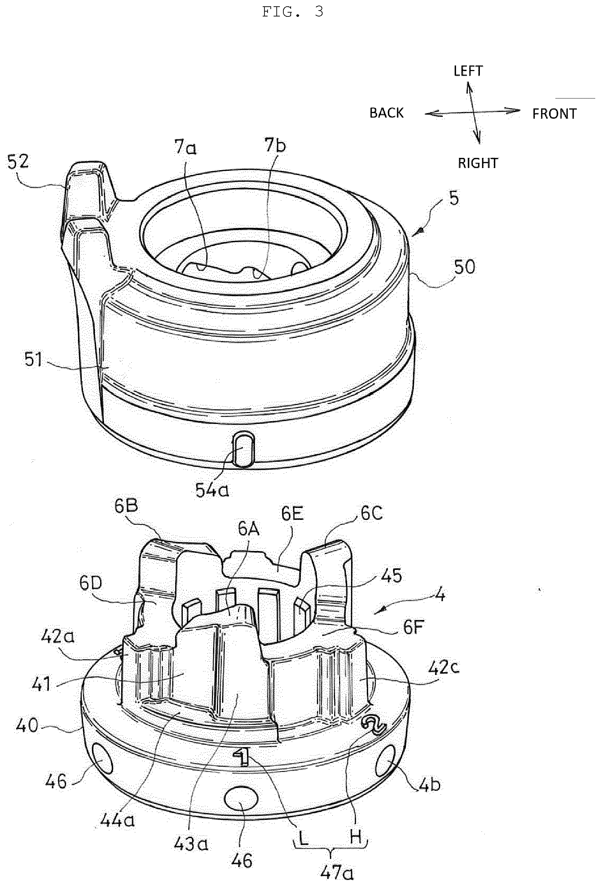

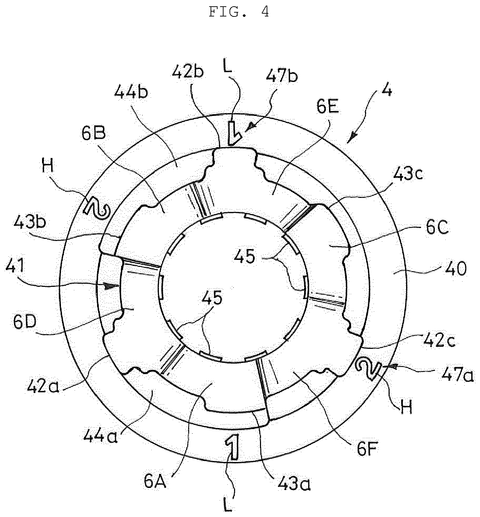

The upper spring seat 4 and the regulating member 5 are each formed of synthetic resin, and are provided with a cam mechanism enabling adjustment of the initial load of the suspension spring 3. As illustrated in Figs. 3 and 4, the upper spring seat 4 includes: an annular seat portion 40 for abutment of the suspension spring 3 at its lower end; and a tubular portion 41 protruding upward from the inner circumferential portion of the seat portion 40. The upper spring seat 4 is substantially annular in entire shape. Three protruding portions 6A, 6B, and 6C protruding higher than the other portions are provided, circumferentially at regular intervals, on the upper end of the tubular portion 41.

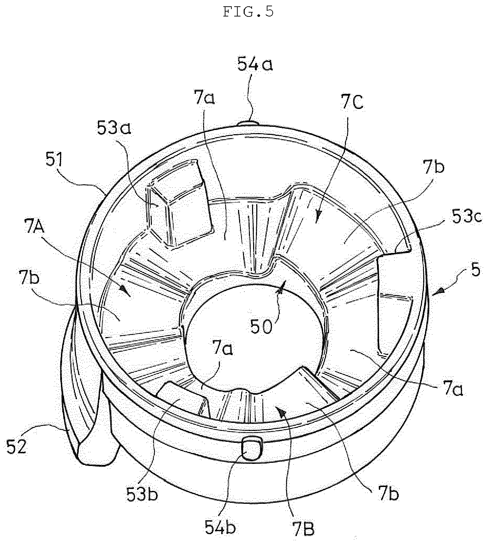

Meanwhile, the regulating member 5 includes: an annular base portion 50; a barrel shaped cover portion 51 protruding downward from the outer circumferential edge of the lower end of the base portion 50; and a forked hook 52 provided at the rear portion of the outer circumference of the base portion 50. The regulating member 5 is substantially annular in entire shape. As illustrated in Fig. 5, the lower end of the base portion 50 surrounded by the cover portion 51 is provided with three cam portions 7A, 7B, and 7C each having a phase difference of 120 degrees, circumferentially, the three cam portions 7A, 7B, and 7C each having a plurality of cam surfaces 7a and 7b different in axial level.

The tubular portion 41 of the upper spring seat 4 is inserted into the cover portion 51 of the regulating member 5, so that the leading ends of the protruding portions 6A, 6B, and 6C each abut selectively on either of the cam surfaces 7a and 7b of the cam portion 7A, 7B, and 7C. As above, the cover portion 51 covers the abutments between the protruding portions 6A, 6B, and 6C and the cam portions 7A, 7B, and 7C, so that any foreign substances are prevented from being pinched between the protruding portions 6A, 6B, and 6C and the cam surfaces 7a and 7b.

In the regulating member 5, the upper end of the base portion 50 is capable of abutting on the coupling member 23, and the hook 52 is capable of hooking onto the coupling member 23. More particularly, as illustrated in Fig. 2, the coupling member 23 includes: a first fitting portion 23a that fits to the upper end portion of the outer tube 20; a second fitting portion 23b that is located behind the first fitting portion 23a and fits to the upper end portion of the tank 22; and a bridge portion 23c connecting the first and second fitting portions 23a and 23b. When the regulating member 5 is pushed up together with the upper spring seat 4 due to the spring force of the suspension spring 3, the upper end of the base portion 50 butts against the first fitting portion 23a and additionally the hook 52 pinches the bridge portion 23c from the right and left sides (from the near and far sides in Fig. 2).

Thus, the regulating member 5 with its circumferential rotation and axial movement regulated is mounted on the outer circumference of the outer tube 20. As described above, the protruding portions 6A, 6B, and 6C of the upper spring seat 4 abut on the cam portions 7A, 7B, and 7C of the regulating member 5, resulting in regulation of upward movement of the upper spring seat 4 to the outer tube 20 (movement to the opposite side to the side closer to the suspension spring). Furthermore, if a worker rotates the upper spring seat 4 to the regulating member 5 to change the cam surface 7a or 7b on which the protruding portions 6A, 6B, and 6C each abut, the axial position of the upper spring seat 4 to the outer tube 20 changes up or down, resulting in a change in the initial load of the suspension spring 3.

The cam portions 7A, 7B, and 7C and the protruding portions 6A, 6B, and 6C in the present embodiment will be described in detail below. In the following description, in the axial direction of the regulating member 5 and the upper spring seat 4 mounted on the outer tube 20, the position farther from the suspension spring 3 is defined as higher and the position closer to the suspension spring 3 is defined as lower.

As described above, the three cam portions 7A, 7B, and 7C are each disposed with a phase difference of 120 degrees circumferentially at the lower end of the base portion 50 in the regulating member 5 (Fig. 5). Along the profile of the lower end of the base portion 50 having the cam surfaces 7a and 7b, the cam portions 7A, 7B, and 7C are the same in shape (cam shape) and height. Thus, one of the lower-end shapes (cam shapes) of the base portion 50 identical in shape and height appears per clockwise rotation or counterclockwise rotation of the regulating member 5 by 120 degrees.

In a case where the cam surfaces in each of the cam portions 7A, 7B, and 7C are numbered in lowering order of position, the cam portions 7A, 7B, and 7C each have two cam surfaces of a first cam surface 7a and a second cam surface 7b lower in position than the first cam surface 7a. Note that the cam portions 7A, 7B, and 7C may each have at least three cam surfaces. In this case, the cam surfaces different in axial level require disposing such that the cam surfaces are lower successively in level clockwise or counterclockwise to the regulating member 5.

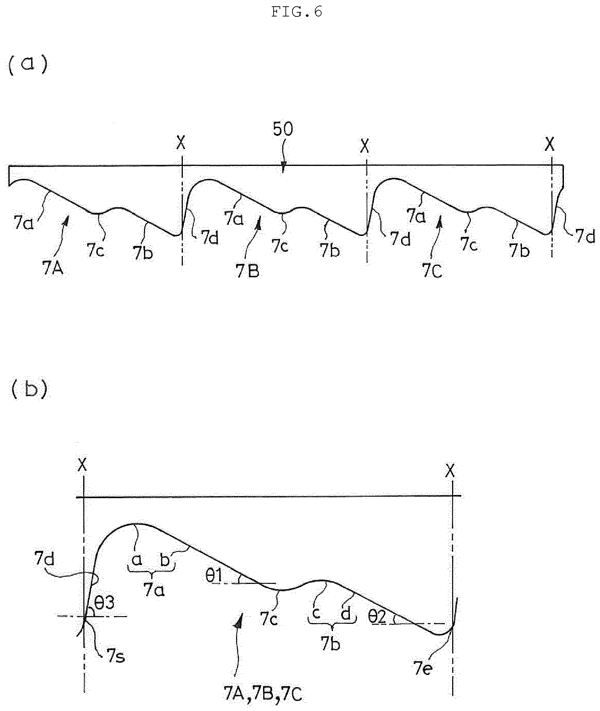

Fig. 6(a) illustrates, when the regulating member 5 is viewed from the inner circumferential side due to development with cutting at a place in the circumferential direction of the regulating member 5, the developed shape (cam shape) of the lower end of the base portion 50 including the cam surfaces 7a and 7b. In Fig. 6, each chain double-dashed line X indicates the boundary between the adjacent cam portions 7A and 7B, cam portions 7B and 7C, or cam portions 7C and 7A.

As illustrated in Fig. 6(b), in the circumferential direction of each of the cam portions 7A, 7B, and 7C, one end closer to the first cam surface 7a is defined as a starting end 7s and the opposite end is defined as a terminating end 7e. The first cam surface 7a includes a concave surface a curving gently with a higher center in the circumferential direction and an inclined surface b that follows the end closer to the terminating end 7e of the concave surface a and has a gently downward gradient to the terminating end 7e, resulting in being in a mountain-like shape. The second cam surface 7b includes a concave surface c curving gently with a higher center in the circumferential direction and an inclined surface d that follows the end closer to the terminating end 7e of the concave surface c and has a gently downward gradient to the terminating end 7e, resulting in being in a mountain-like shape. The respective inclined surfaces b and d of the first and second cam surfaces 7a and 7b are identical in gradient, and thus the respective angles of inclination θ1 and θ2 of the inclined surfaces b and d are equivalent.

Furthermore, in each of the cam portions 7A, 7B, and 7C (between chain double-dashed lines X and X), a convex surface 7c curves gently with a lower center in the circumferential direction between the first and second cam surfaces 7a and 7b. Meanwhile, a reverse inclined surface 7d is closer to the starting end 7s than the first cam surface 7a is and has a sharply downward gradient from the end closer to the starting end 7s of the concave surface a of the first cam surface 7a to the starting end 7s. In other words, the reverse inclined surface 7d slants reversely to the inclined surfaces b and d and has a gradient (angle of inclination θ3) remarkably larger than the respective gradients of the inclined surfaces b and d (angles of inclination θ1 and θ2).

Next, as described above, the three protruding portions 6A, 6B, and 6C are disposed circumferentially at regular intervals on the upper end of the tubular portion 41 in the upper spring seat 4 (Figs. 3 and 4). The portions at which no protruding portions 6A, 6B, and 6C are provided on the upper end of the tubular portion 41 are defined as bottom portions 6D, 6E, and 6F. Along the profile of the upper end of the tubular portion 41 having the protruding portions 6A, 6B, and 6C and the bottom portions 6D, 6E, and 6F, the protruding portions 6A, 6B, and 6C are the same in shape and height and the bottom portions 6D, 6E, and 6F are the same in shape and height. Thus, one of the upper-end shapes of the tubular portion 41 identical in shape and height appears per clockwise rotation or counterclockwise rotation of the upper spring seat 4 by 120 degrees.

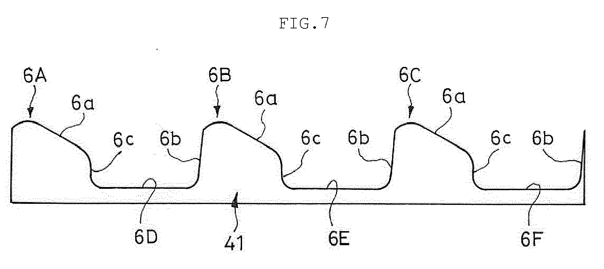

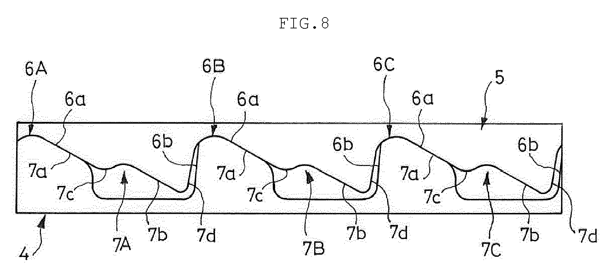

Fig. 7 illustrates, when the upper spring seat 4 is viewed from the inner circumferential side due to development with cutting at a place in the circumferential direction of the upper spring seat 4, the developed shape of the upper end of the tubular portion 41 including the protruding portions 6A, 6B, and 6C and the bottom portions 6D, 6E, and 6F. Fig. 8 illustrates, when the upper spring seat 4 and the regulating member 5 are developed with cutting at a place in the circumferential direction with the protruding portions 6A, 6B, and 6C abutting on the first cam surfaces 7a of the cam portions 7A, 7B, and 7C, the developed shape of the opposed surface of the protruding portions 6A, 6B, and 6C and the bottom portions 6D, 6E, and 6F and the opposed surface of the cam portions 7A, 7B, and 7C.

As illustrated in Fig. 7, the upper end of each of the protruding portions 6A, 6B, and 6C is provided with an abutment surface 6a having a gradient identical to those of the inclined surfaces b and d (Fig. 6). That is, the inclined surfaces b and d are equivalent in angle of inclination to the abutment surface 6a. With the upper spring seat 4 and the regulating member 5 mounted on the outer tube 20, the abutment surface 6a slants along the inclined surfaces b and d. In other words, in the attached state, the abutment surface 6a and the inclined surfaces b and d are parallel, resulting in surface abutment, as illustrated in Fig. 8.

As above, the protruding portions 6A, 6B, and 6C of the upper spring seat 4 and the cam portions 7A, 7B, and 7C of the regulating member 5 have surface contact. Furthermore, the protruding portions 6A, 6B, and 6C are three in total number, and the cam portions 7A, 7B, and 7C are three in total number. Thus, abutments in surface contact are present at three places in the circumferential direction between the upper spring seat 4 and the regulating member 5. The protruding portions 6A, 6B, and 6C and the cam portions 7A, 7B, and 7C as the abutments are thick in thickness.

Thus, although the upper spring seat 4 is pushed up to the regulating member 5 due to the spring force of the suspension spring 3, the spring force of the suspension spring 3 acting on the abutments is dispersed, so that, even in a case where the upper spring seat 4 and the regulating member 5 are each formed of synthetic resin, the durability thereof can be secured. Furthermore, the three places in the circumferential direction of the upper spring seat 4 are supported by the regulating member 5, so that the upper spring seat 4 can be prevented from being unsteady to the regulating member 5.

In the present embodiment, from side surfaces 6b and 6c located at both ends in the circumferential direction of each of the protruding portions 6A, 6B, and 6C, the side surface followed by a higher position of the abutment surface 6a is defined as a longer side surface 6b. As illustrated in Fig. 8, with the protruding portions 6A, 6B, and 6C abutting on the first cam surfaces 7a of the cam portions 7A, 7B, and 7C, respectively, a gap is present between each longer side surface 6b and the reverse inclined surface 7d opposed thereto. Furthermore, in that state, gaps are present between the cam portions 7A, 7B, and 7C and the bottom portions 6D, 6E, and 6F opposed thereto. Thus, even in a case where the protruding portions 6A, 6B, and 6C and the cam portions 7A, 7B, and 7C have slight errors in dimensions, the inclined surfaces b of the first cam surfaces 7a can be prevented from rising completely from the abutment surfaces 6a of the protruding portions 6A, 6B, and 6C.

The upper end of each longer side surface 6b abuts on the concave surface a (Fig. 6) with the abutment surface 6a abutting on the inclined surface b of the first cam surface 7a and abuts on the concave surface c (Fig. 6) with the abutment surface 6a abutting on the inclined surface d of the second cam surface 7b. As above, when the spring force of the suspension spring 3 acts on the upper spring seat 4 and the regulating member 5 with each abutment surface 6a abutting on the inclined surface b or d, each abutment surface 6a and the inclined surfaces b and d slanting in the same direction, the upper spring seat 4 attempts to rotate to the left in Fig. 8 with respect to the regulating member 5. However, the rotation is hindered due to the contact between the upper end of each longer side surface 6b and the concave surfaces a and c.

However, because the protrusion of each convex surface 7c followed by the concave surface c of the second cam surface 7b is low in height, if the worker operates to rotate the upper spring seat 4, the protruding portions 6A, 6B, and 6C each get over the convex surface 7c. The protruding portions 6A, 6B, and 6C each have a curved surface between the side surface 6b and the abutment surface 6a and a curved surface between the side surface 6c and the abutment surface 6a, so that the protruding portions 6A, 6B, and 6C each have both shoulders round in shape. Thus, the protruding portions 6A, 6B, and 6C each get over the convex surface 7c, easily.

That is, in a case where the protruding portions 6A, 6B, and 6C each abut on the second cam surface 7b with the lower side and higher side of the inclined surfaces b and d or abutment surface 6a defined, respectively, as positive and negative when the inclined surfaces b and d or the abutment surface 6a is viewed, the worker can rotate the upper spring seat 4, negatively, with respect to the regulating member 5. In a case where the protruding portions 6A, 6B, and 6C each abut on the first cam surface 7a, the worker can rotate the upper spring seat 4, positively, with respect to the regulating member 5.

Meanwhile, because the concave surface a of each first cam surface 7a follows the reverse inclined surface 7d, even when the worker attempts to operate to rotate the upper spring seat 4, the protruding portions 6A, 6B, and 6C each do not get over the reverse inclined surface 7d. Thus, with the protruding portions 6A, 6B, and 6C abutting on the first cam surfaces 7a of the cam portions 7A, 7B, and 7C, negative rotation of the upper spring seat 4 to the regulating member 5 is hindered.

Furthermore, as described in detail below, the inner circumference of the cover portion 51 of the regulating member 5 is provided with ribs 53a, 53b, and 53c (Fig. 5), and the outer circumference of the tubular portion 41 of the upper spring seat 4 is provided with stopper ribs 42a, 42b, and 42c (Fig. 4). With the protruding portions 6A, 6B, and 6C abutting on the second cam surfaces 7b of the cam portions 7A, 7B, and 7C, positive rotation of the upper spring seat 4 to the regulating member 5 is hindered.

That is, in the present embodiment, with the upper spring seat 4 and the regulating member 5 combined together, the cam portions 7A, 7B, and 7C correspond to the protruding portions 6A, 6B, and 6C in one-to-one relationship. Specifically, the protruding portion 6A corresponds to the cam portion 7A, the protruding portion 6B corresponds to the cam portion 7B, and the protruding portion 6C corresponds to the cam portion 7C. Thus, the protruding portion 6A does not abut on the cam portions 7B and 7C, the protruding portion 6B does not abut on the cam portions 7A and 7C, and the protruding portion 6C does not abut on the cam portions 7A and 7B.

Next, as illustrated in Fig. 5, the ribs 53a, 53b, and 53b extending axially are provided circumferentially at regular intervals on the inner circumference of the cover portion 51 in the regulating member 5. When the heights of the ribs 53a, 53b, and 53c protruding from the cover portion 51 to the center (radially inward) are defined as rib heights, the rib heights of the three ribs 53a, 53b, and 53c are the same.

As illustrated in Fig. 4, three stopper ribs 42a, 42b, and 42c extending axially and three guide ribs 43a, 43b, and 43c extending axially are provided circumferentially alternately at regular intervals on the outer circumference of the tubular portion 41 in the upper spring seat 4. The heights of the stopper ribs 42a, 42b, and 42c and the guide ribs 43a, 43b, and 43c that protrude radially outward from the tubular portion 41 are defined as rib heights. The rib heights of the three stopper ribs 42a, 42b, and 42c are the same, and the rib heights of the three guide ribs 43a, 43b, and 43c are the same. The rib heights of the stopper ribs 42a, 42b, and 42c are higher than the rib heights of the guide ribs 43a, 43b, and 43c.

For each rib, such as the ribs, the stopper ribs, and the guide ribs, the highest position in rib height (position closest to the center of the cover portion 51 or position farthest from the center of the tubular portion 41) is defined as a leading end. With the tubular portion 41 of the upper spring seat 4 inserted inside the cover portion 51 of the regulating member 5, the leading ends of the guide ribs 43a, 43b, and 43c are capable of being slidably in contact with the leading ends of the ribs 53a, 53b, and 53c, respectively. The leading ends of the ribs 53a, 53b, and 53c are each located between the corresponding adjacent stopper ribs from the stopper ribs 42a, 42b, and 42c. The leading ends of the ribs 53a, 53b, and 53c are closer to the tubular portion 41 (closer to the center) than the leading ends of the stopper ribs 42a, 42b, and 42c are.

In a case where the upper spring seat 4 is rotated positively or negatively in the range in which the protruding portions 6A, 6B, and 6C abut on the first cam surfaces 7a or second cam surfaces 7b of the corresponding cam portions 7A, 7B, and 7C, the stopper ribs 42a, 42b, and 42c do not interfere with the ribs 53a, 53b, and 53c, so that the rotation is allowed. However, rotation of the upper spring seat 4 above the range causes the stopper ribs 42a, 42b, and 42c to interfere with the ribs 53a, 53b, and 53c, resulting in regulation of the rotation of the upper spring seat 4.

In the present embodiment, as illustrated in Figs. 3 and 4, a plurality of inner ribs 45 extending axially are arrayed circumferentially on the inner circumference ranging from the tubular portion 41 to the seat portion 40 in the upper spring seat 4. The inner ribs 45 are provided to be slidably in contact with the outer circumference of the outer tube 20. Thus, the upper spring seat 4 mounted on the outer circumference of the outer tube 20 rotates or moves up and down while guided by the outer tube 20.

Furthermore, in the present embodiment, as illustrated in Fig. 3, the seat portion 40 of the upper spring seat 4 has a plurality of engagement holes 46 that are open laterally and are arrayed circumferentially. Thus, the worker can rotate the upper spring seat 4 by engaging a tool or the like with any of the engagement holes 46. Note that the configuration of an engagement portion for engaging a tool or the like with the upper spring seat 4 is not limited to the engagement holes 46, and thus can be appropriately changed. For example, instead of the engagement holes 46, a portion having a width across flats or a notch may be formed on the outer circumference of the seat portion 40.

In the present embodiment, provided is a mis-combination preventive portion that prevents any combinations out of the correspondence relationship between the protruding portions 6A, 6B, and 6C and the cam portions 7A, 7B, and 7C.

More particularly, as illustrated in Fig. 5, the one rib 53c among the three ribs 53a, 53b, and 53c with which the regulating member 5 is provided is longer axially than the other two ribs 53a and 53b. The lower end of the rib 53c is located lower than the lower ends of the other shorter ribs 53a and 53b. Hereinafter, in order to distinguish the ribs, the rib 53c is also referred to as a longer rib 53c and the ribs 53a and 53c are also referred to as shorter ribs 53a and 53b.

As illustrated in Fig. 4, the outer circumference of the base of the tubular portion 41 in the upper spring seat 4 is provided with two arc-like step portions 44a and 44b extending circumferentially. As illustrated in Fig. 3, on the circumference of a circle passing through the step portions 44a and 44b, the upper surfaces of the portions provided with the step portions 44a and 44b are located higher by one step than the upper surfaces of the other portions.

With the protruding portions 6A, 6B, and 6C abutting on the first cam surfaces 7a of the corresponding cam portions 7A, 7B, and 7C, the lower ends of the two shorter ribs 53a and 53b are opposed to the upper ends of the step portions 44a and 44b without mutual interference. In contrast to this, abutment of the protruding portions 6A, 6B, and 6C onto the first cam surfaces 7a of the cam portions 7A, 7B, and 7C out of correspondence causes the lower end of the longer rib 53c to butt against either of the step portions 44a and 44b, so that the first cam surfaces 7a rise from the protruding portions 6A, 6B, and 6C.

With the tubular portion 41 of the upper spring seat 4 inserted with butting in the cover portion 51 of the regulating member 5, the axial distance from the lower end of the seat portion 40 of the upper spring seat 4 to the upper end of the base portion 50 of the regulating member is defined as a set height. With the protruding portions 6A, 6B, and 6C abutting on the first cam surfaces 7a of the corresponding cam portions 7A, 7B, and 7C, the set height is defined as a normal value. Then, with the lower end of the longer rib 53c butting against the step portion 44a or 44b as described above, the set height is larger than the normal value. Thus, detection of mis-combination enables prevention of any combinations out of the correspondence relationship between the protruding portions 6A, 6B, and 6C and the cam portions 7A, 7B, and 7C.

Furthermore, in the present embodiment, marks 54a and 54b and scales 47a and 47b are provided such that the worker can verify, outside the cover portion 51, whether the protruding portions 6A, 6B, and 6C are each to abut on the first cam surface 7a or the second cam surface 7b or whether the protruding portions 6A, 6B, and 6C each abut on the first cam surface 7a or the second cam surface 7b.

More particularly, as illustrated in Figs. 3 and 5, the marks 54a and 54b are provided, respectively, on the right and left side portions of the outer circumference of the cover portion 51 in the regulating member 5. As illustrated in Figs. 3 and 4, the scales 47 and 47b are provided at positions corresponding to the marks 54a and 54b, on the upper face of the seat portion 40 of the upper spring seat 4. In the present embodiment, the scales 47a and 47b each include a number L with "1" and a number H with "2". Needless to say, the numbers L and H are not necessarily "1" and "2". Alphabets or symbols other than numbers may be used for the scales 47a and 47b.

With the protruding portions 6A, 6B, and 6C abutting on the first cam surfaces 7a of the corresponding cam portions 7A, 7B, and 7C, the marks 54a and 54b point the numbers L with "1" in the corresponding scales 47a and 47b. With the protruding portions 6A, 6B, and 6C abutting on the second cam surfaces 7b of the corresponding cam portions 7A, 7B, and 7C, the marks 54a and 54b point the numbers H with "2" in the corresponding scales 47a and 47b.

According to the above configuration, at the time of mounting of the upper spring seat 4 and the regulating member 5 on the outer tube 20, the worker inserts the tubular portion 41 of the upper spring seat 4 into the cover portion 51 of the regulating member 5 such that the marks 54a and 54b each point the number L with "1". Then, after insertion of the tubular portion 41 with butting, the set height is verified. In a case where the set height indicates the normal value, it can be determined that the upper spring seat 4 has been properly set to the regulating member 5, namely, it can be determined that the protruding portions 6A, 6B, and 6C abut on the first cam surfaces 7a of the corresponding cam portions 7A, 7B, and 7C.

Due to positive rotation of the upper spring seat 4 with the marks 54a and 54b each pointing the number L with "1" as above, the marks 54a and 54b are each adjusted to the number H with "2", so that the protruding portions 6A, 6B, and 6C abut on the second cam surfaces 7b of the corresponding cam portions 7A, 7B, and 7C. The positions of the second cam surfaces 7b are lower than the positions of the first cam surfaces 7a. Thus, the position of the upper spring seat 4 to the outer tube 20 is lower and the initial load of the suspension spring 3 is larger with the marks 54a and 54b each adjusted to the number H with "2" than to the number L with "1".

Conversely, due to negative rotation of the upper spring seat 4 with the marks 54a and 54b each pointing the number H with "2", the marks 54a and 54b are each adjusted to the number L with "1", so that the protruding portions 6A, 6B, and 6C abut on the first cam surfaces 7a of the corresponding cam portions 7A, 7B, and 7C. The positions of the first cam surfaces 7a are higher than the positions of the second cam surfaces 7b. Thus, the position of the upper spring seat 4 to the outer tube 20 is higher and the initial load of the suspension spring 3 is smaller with the marks 54a and 54b each adjusted to the number L with "1" than to the number H with "2".

The functional effect of the rear cushion device S as the suspension device according to the embodiment of the present invention will be described below.

In the present embodiment, the rear cushion device (suspension device) S includes: the damper (telescopic member) 2 including the outer tube 20 and the rod 21 inserted movably axially in the outer tube 20, the damper 2 being to expand and contract; the suspension spring 3 which is provided around the outer circumference of the damper 2, the suspension spring 3 biasing the damper 2 in the direction of extension; the spring seat 4 annular, the spring seat 4 mounted, rotatably circumferentially and movably axially, on the outer circumference of the outer tube 20, the spring seat 4 supporting one end of the suspension spring 3; and the regulating member 5 annular, the regulating member 5 being provided on the opposite side to the side closer to the suspension spring of the spring seat 4 on the outer circumference of the outer tube 20, the regulating member 5 regulating movement of the spring seat 4 to the opposite side to the side closer to the suspension spring.

The rear cushion device S according to the present embodiment further includes: the three cam portions 7A, 7B, and 7C each having a phase difference of 120 degrees provided circumferentially in the regulating member 5; and the three protruding portions 6A, 6B, and 6C provided circumferentially at regular intervals in the spring seat 4. The cam portions 7A, 7B, and 7C each have the plurality of cam surfaces 7a and 7b different in axial level. The cam surfaces 7a and 7b include, respectively, the inclined surfaces b and d having the angles of inclination θ1 and θ2 that are equivalent. The protruding portions 6A, 6B, and 6C each have the abutment surface 6a that slants along the inclined surfaces b and d and is capable of abutting on the inclined surfaces b and d. The equivalence of the angles of inclination conceptually includes not only exact agreement but also slight difference due to manufacturing errors.

According to the above configuration, changing the cam surface 7a or 7b on which the protruding portions 6A, 6B, and 6C each abut causes a change in the axial position of the spring seat 4 to the outer tube 20, so that the initial load of the suspension spring 3 can be adjusted.

According to the above configuration, the protruding portions 6A, 6B, and 6C of the spring seat 4 and the cam portions 7A, 7B, and 7C of the regulating member 5 are in surface contact with each abutment surface 6a and either of the inclined surfaces b and d. Furthermore, the protruding portions 6A, 6B, and 6C are three in total number, and the cam portions 7A, 7B, and 7C are three in total number. Thus, abutments in surface contact are present at three places in the circumferential direction between the spring seat 4 and the regulating member 5. Thus, in comparison to a conventional suspension device having a single protruding portion, the rear cushion device S has a wider contact area between the spring seat 4 and the regulating member 5, and the spring force of the suspension spring 3 acts in a dispersing manner. Thus, pressure applied to each abutment between the spring seat 4 and the regulating member 5 due to the spring force of the suspension spring 3 is lower than ever before.

Thus, the rear cushion device S according to the present embodiment allows the spring seat 4 and the regulating member 5 to be each formed of material lower in strength and lighter in weight than ever before and requires no welding for the regulating member 5. That is, the above configuration leads to improvement in the degree of freedom of material selection for the spring seat 4 and the regulating member 5, so that synthetic resin can be selected as the material therefor. Because no welding is required for the regulating member 5, even in a case where the regulating member 5 is provided on the outer circumference of the outer tube 20, no protector tube is required. Furthermore, according to the above configuration, the spring seat 4 is supported at three places in the circumferential direction by the regulating member 5, so that the spring seat 4 can be prevented from being unsteady to the regulating member 5. Thus, unusual noise due to the unsteadiness can be prevented from occurring.

As in the present embodiment, formation of the spring seat 4 and the regulating member 5 with synthetic resin causes a reduction in the weight of the spring seat 4 and the regulating member 5, so that the rear cushion device S can be reduced in weight. Furthermore, even with a larger outer diameter of the base portion 50 having the cam portions 7A, 7B, and 7C and a larger outer diameter of the tubular portion 41 having the protruding portions 6A, 6B, and 6C, the spring seat 4 and the regulating member 5 formed of synthetic resin is not as heavy as formed of metal in weight. Thus, contact area can be easily secured between the cam portions 7A, 7B, and 7C and the protruding portions 6A, 6B, and 6C. Furthermore, longer circumferential lengths of the cam surfaces 7a and 7b enable gentle gradients of the inclined surfaces b and d, so that an operation of rotation of the spring seat 4 to the regulating member 5 can be easily performed.

Note that types of synthetic resin as the material of the spring seat 4 and the material of the regulating member 5 include, but are not particularly limited to, nylon and polypropylene. For example, in a case where the suspension spring 3 has a considerably large spring force, a fiber-reinforced resin doped with a reinforcing material, such as glass fiber, may be selected.

In the rear cushion device S according to the present embodiment, the cam surface located farthest from the suspension spring 3 in the plurality of cam surfaces 7a and 7b included in each of the cam portions 7A, 7B, and 7C is the first cam surface 7a. In each of the cam portions 7A, 7B, and 7C, the end closer to the first cam surface 7a is the starting end 7s and the opposite end is the terminating end 7e. The inclined surfaces b and d each have a slope lowering (toward the suspension spring 3) in level toward the terminating end 7e. In each of the cam portions 7A, 7B, and 7C, the reverse inclined surface 7d slanting reversely to the inclined surfaces b and d is provided on the side closer to the starting end 7s of the first cam surface 7a.

With the protruding portions 6A, 6B, and 6C each having the abutment surface 6a abutting on the inclined surface b of the first cam surface 7a, a gap is present between each of the protruding portions 6A, 6B, and 6C and the reverse inclined surface 7d. In addition, gaps are present between the bottom portions 6D, 6E, and 6F provided between the adjacent protruding portions 6A, 6B, and 6C and the cam portions 7A, 7B, and 7C. Thus, even in a case where the protruding portions 6A, 6B, and 6C and the cam portions 7A, 7B, and 7C have slight errors in dimensions, the abutment surfaces 6a of the protruding portions 6A, 6B, and 6C abut reliably on the inclined surfaces b of the first cam surfaces 7a.

That is, according to the above configuration, even in a case where slight errors in dimensions are present, the spring seat 4 is supported at three places in the circumferential direction by the regulating member 5, so that unusual noise due to unsteadiness can be prevented from occurring. Furthermore, according to the above configuration, the spring seat 4 and the regulating member 5 are allowed to have slight errors in dimensions, resulting in improvement in the degree of freedom of molding-method selection. Thus, the spring seat 4 and the regulating member 5 can be molded by a method excelling in mass production, such as injection molding. However, the spring seat 4 and the regulating member 5 may be formed, for example, by cutting or the like, and thus the molding method can be appropriately changed.

In the rear cushion device S according to the present embodiment, the tank 22 is provided behind the outer tube 20. In radial view of the outer tube 20 (state viewed from one side in the radial direction), the tank 22 is provided at a position overlapping the outer tube 20. Furthermore, respective portions in the circumferential direction of the spring seat 4 and the regulating member 5 are disposed between the outer tube 20 and the tank 22, and circumferential rotation of the regulating member 5 to the outer tube 20 is regulated.

As above, in a case where the outer tube 20 and the tank 22 are arrayed along the radial direction of the outer tube 20 and respective portions in the circumferential direction of the spring seat 4 and the regulating member 5 are disposed between the outer tube 20 and the tank 22, if the worker grasps the spring seat 4 and the regulating member 5 with both hands and performs relative rotation thereof in order to adjust the initial load of the suspension spring 3, the hands of the worker are likely to be caught and pinched between the spring seat 4 and the tank 22 or between the regulating member 5 and the tank 22 at the time of the rotation.

Thus, as in the present embodiment, with the regulating member 5 with its circumferential rotation regulated mounted on the outer tube 20, when the worker engages a tool or the like with the spring seat 4 and rotates the spring seat 4, only the spring seat 4 can be rotated without corotation of the spring seat 4 and the regulating member 5. That is, according to the above configuration, use of a tool or the like enables easy rotation of the spring seat 4 to the regulating member 5. Thus, at the time of adjustment of the initial load of the suspension spring 3, the hands of the worker are protected from being pinched between the spring seat 4 and the tank 22 or between the regulating member 5 and the tank 22, resulting in favorable operability.

In the rear cushion device S according to the present embodiment, the marks 54a and 54b are provided, respectively, on the right and left of the outer circumference of the regulating member 5. In addition, the scales 47a and 47b each indicating the cam surfaces 7a and 7b of which the protruding portions 6A, 6B, and 6C each abut on either, are provided at positions corresponding to the marks 54a and 54b, in the spring seat 4. The right and left of the outer circumference of the regulating member 5 correspond in position to the right and left of the outer tube 20 when the outer tube 20 is viewed with the tank 22 oriented in front. The marks 54a and 54b are provided at such positions, so that the marks 54a and 54b do not hide behind the tank 22.

Furthermore, even in a case where the rear cushion device S is provided on the right and left of the body 10, the worker can verify marks from the right and left of the body 10. More specifically, for the rear cushion device S with which the body 10 is equipped on the right side, the mark 54a on the right side can be verified. In addition, for the rear cushion device S with which the body 10 is equipped on the left side, the mark 54b on the left side can be verified. Moreover, as described above, because the regulating member 5 is regulated in rotation to the outer tube 20, the marks 54a and 54b are fixed in position, so that the worker visually recognizes the marks 54a and 54b, easily.

However, as in the present embodiment, in a case where the two marks 54a and 54b and the two scales 47a and 47b are each provided with a phase difference of 180 degrees to the three cam portions 7A, 7B, and 7C and the three protruding portions 6A, 6B, and 6C each disposed with a phase difference of 120 degrees, the marks 54a and 54b and the scales 47a and 47b do not correspond in position to the cam portions 7A, 7B, and 7C and the protruding portions 6A, 6B, and 6C.

Specifically, as illustrated in Fig. 4, in the spring seat 4, the number L with "1" of the scale 47a is displayed at a position corresponding to the protruding portion 6A, the number H with "2" of the scale 47b is displayed at a position corresponding to the protruding portion 6B, and no scale is provided at a position corresponding to the protruding portion 6C. Meanwhile, as illustrated in Fig. 5, in the regulating member 5, the mark 54a is provided at a position corresponding to the first cam surface 7a of the cam portion 7A, the mark 54b is provided at a position corresponding to the second cam surface 7b of the cam portion 7B, and no marks are provided at positions corresponding to the first and second cam surfaces 7a and 7b of the cam portion 7C.

Under such a situation, for example, adjustment of the number L with "1" of the scale 47a at the position corresponding to the protruding portion 6A to the mark 54a at the position corresponding to the first cam surface 7a enables the protruding portions 6A, 6B, and 6C each to abut on the first cam surface 7a, so that the initial load of the suspension spring 3 can be set smaller. However, adjustment of the number L with "1" of the scale 47a at the position corresponding to the protruding portion 6A to the mark 54b at the position corresponding to the second cam surface 7b causes the protruding portions 6A, 6B, and 6C each to abut on the second cam surface 7b, so that the initial load of the suspension spring 3 is set larger.

Thus, as in the present embodiment, in a case where the spring seat 4 having the three protruding portions 6A, 6B, and 6C is provided with the two scales 47a and 47b and the regulating member 5 having the three cam portions 7A, 7B, and 7C is provided with the two marks 54a and 54b, the protruding portions 6A, 6B, and 6C always correspond to the cam portions 7A, 7B, and 7C in one-to-one relationship. Thus, a defect that the initial load of the suspension spring 3 is set differently in spite of adjustment to the same scale (e.g., the number L with "1") can be prevented from occurring.

The rear cushion device S according to the present embodiment includes the ribs 53a, 53b, and 53c different in length and the step portions 44a and 44b as the mis-combination preventive portion that prevents any combinations out of the correspondence relationship between the protruding portions 6A, 6B, and 6C and the cam portions 7A, 7B, and 7C. Thus, such a defect that the initial load of the suspension spring 3 is set differently in spite of adjustment to the same scale as described above can be easily and reliably prevented from occurring. However, the configuration of the mis-combination preventive portion is not limited to the ribs 53a, 53b, and 53c and the step portions 44a and 44b, and thus can be appropriately changed.

In the present embodiment, the cam portions 7A, 7B, and 7C each have the reverse inclined surface 7d and the spring seat 4 has the stopper ribs 42a, 42b, and 42c, so that the protruding portions 6A, 6B, and 6C correspond to the cam portions 7A, 7B, and 7C in one-to-one relationship. However, the configuration can be appropriately changed.

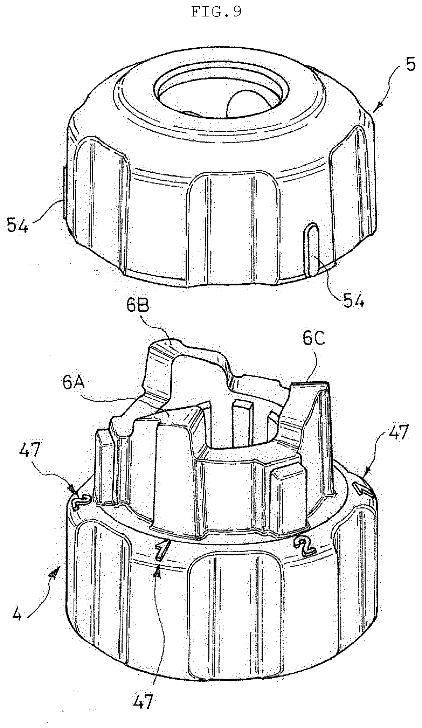

Furthermore, for example, in a case where the marks 54a and 54b are not hidden even when the regulating member 5 rotates because of the rear cushion device S having no tank 22 or because of the spring seat 4 and the regulating member 5 not disposed between the outer tube 20 and the tank 22 although the rear cushion device S has the tank 22, as illustrated in Fig. 9, three marks 54 (two scales illustrated in Fig. 9) may be provided circumferentially at regular intervals on the regulating member 5, and three scales 47 may be provided circumferentially at regular intervals on the spring seat 4. In this case, the cam portions 7A, 7B, and 7A and the protruding portions 6A, 6B, and 6C do not need to correspond in one-to-one relationship, so that the mis-combination preventive portion can be omitted.

In a case where there is no risk of the hands of the worker being pinched even when the worker holds the spring seat 4 and the regulating member 5 with both hands and performs relative rotation thereof, the regulating member 5 may be mounted, rotatably circumferentially, on the outer circumference of the outer tube 20. The outer circumferences of the spring seat 4 and the regulating member 5 illustrated in Fig. 9 are each provided with unevenness for the worker not to slip in an operation of rotation by grasping.

In the rear cushion device S according to the present embodiment, the three cam portions 7A, 7B, and 7C are arrayed without any gap, and the cam portions 7A, 7B, and 7C each have the two cam surfaces 7a and 7b different in level. Thus, the initial load of the suspension spring 3 can be adjusted with two phases. In addition, even in a case where the regulating member 5 is provided with the three cam portions 7A, 7B, and 7C, longer circumferential lengths of the cam surfaces 7a and 7b enable gentle gradients of the inclined surfaces b and d. Thus, contact area can be easily secured between the cam portions 7A, 7B, and 7C and the protruding portions 6A, 6B, and 6C, and an operation of rotation of the spring seat 4 to the regulating member 5 can be easily performed.

However, as described above, the cam portions 7A, 7B, and 7C may each have at least three cam surfaces, and the initial load of the suspension spring 3 may be adjusted with at least three phases. Furthermore, a gap may be provided between the adjacent cam portions 7A and 7B, a gap may be provided between the adjacent cam portions 7B and 7C, and a gap may be provided between the adjacent cam portions 7C and 7A.

In the present embodiment, the cam portions 7A, 7B, and 7C are provided in the regulating member 5, and the protruding portions 6A, 6B, and 6C are provided in the spring seat 4. Conversely, the cam portions 7A, 7B, and 7C may be provided in the spring seat 4, and the protruding portions 6A, 6B, and 6C may be provided in the regulating member 5.

Furthermore, the spring seat 4 and the regulating member 5 each provided with the cam portions 7A, 7B, and 7C or the protruding portions 6A, 6B, and 6C may be provided on the outer circumference of the rod 21 instead of on the outer circumference of the outer tube 20. The spring seat 4 including the cam portions 7A, 7B, and 7C or the protruding portions 6A, 6B, and 6C may serve as a lower spring seat.

Although the preferred embodiment of the present invention has been described in detail above, modifications, variations, and alterations can be made without departing from the scope of the claims.

### Reference Signs List

- b, d: Inclined surface
- S: Rear cushion device (suspension device)
- 2: Damper (telescopic member)
- 3: Suspension spring
- 4: Spring seat
- 5: Regulating member
- 6A, 6B, 6C: Protruding portion
- 6D, 6E, F: Bottom portion
- 6a: Abutment surface
- 7A, 7B, 7C: Cam portion
- 7a: First cam surface (cam surface)
- 7b: Second cam surface (cam surface)
- 7d: Reverse inclined surface
- 7e: Terminating end
- 7s: Starting end
- 20: Outer tube
- 21: Rod
- 22: Tank
- 44a, 44b: Step portion (mis-combination preventive portion)
- 47a, 47b: Scale
- 53a, 53b, 53c: Rib (mis-combination preventive portion)
- 54a, 54b: Mark

## Claims

1. A suspension device comprising:
a telescopic member including an outer tube and a rod inserted movably axially in the outer tube, the telescopic member being configured to expand and contract;
a suspension spring which is provided around an outer circumference of the telescopic member passes, the suspension spring biasing the telescopic member in a direction of extension;
a spring seat annular, the spring seat being mounted, rotatably circumferentially and movably axially, on an outer circumference of one of the outer tube and the rod, the spring seat supporting one end of the suspension spring;
a regulating member annular, the regulating member being provided, on an opposite side to a side closer to the suspension spring of the spring seat, on the outer circumference of the outer tube or the rod on which the spring seat is mounted, the regulating member regulating movement of the spring seat to the opposite side to the side closer to the suspension spring;
three cam portions each having a phase difference of 120 degrees provided circumferentially in one of the spring seat and the regulating member; and
three protruding portions provided circumferentially at regular intervals in another of the spring seat and the regulating member, wherein
the cam portions each have a plurality of cam surfaces different in axial level,
the cam surfaces each include an inclined surface, and the respective inclined surfaces of the cam surfaces are equivalent in angle of inclination, and
the protruding portions each have an abutment surface that slants along the inclined surfaces and is capable of abutting on the inclined surfaces.

2. The suspension device according to claim 1, wherein
in a case where the cam surface located farthest from the suspension spring in the plurality of cam surfaces in each of the cam portions is defined as a first cam surface, an end closer to the first cam surface in each of the cam portions is defined as a starting end, and an end opposite to the end closer to the first cam surface is defined as a terminating end,
the inclined surfaces each slant closer to the suspension spring toward the terminating end,
a reverse inclined surface slanting reversely to the inclined surfaces is provided on a side closer to the starting end of the first cam surface in each of the cam portions, and
with the first cam surface having the inclined surface on which the abutment surface of the corresponding protruding portion abuts, a gap is present between the reverse inclined surface and the corresponding protruding portion, and a gap is present between a bottom portion provided between the corresponding adjacent protruding portions and the corresponding cam portion.

3. The suspension device according to claim 1, further comprising:
a tank provided at a position overlapping the outer tube in radial view of the outer tube, wherein
respective portions in a circumferential direction of the spring seat and the regulating member are disposed between the outer tube and the tank, and
circumferential rotation of the regulating member to the outer tube is regulated.

4. The suspension device according to claim 3, wherein
an outer circumference of the regulating member is provided with a mark at a position corresponding to right of the outer tube and a mark at a position corresponding to left of the outer tube when the outer tube is viewed with the tank oriented in front,
the spring seat is provided with a scale indicating the cam surface on which the protruding portions each abut, at a position corresponding to each of the marks, and
the protruding portions correspond to the cam portions in one-to-one relationship.

5. The suspension device according to claim 4, further comprising:
a mis-combination preventive portion that prevents any combinations out of correspondence relationship between the protruding portions and the cam portions.
